# EUROPEAN PATENT APPLICATION

(11) **EP 4 358 564 A1**
(43) Date of publication of application: **24.04.2024**
(21) Application number: 21945486.5
(22) Date of filing: 17.06.2021
(51) Int. Cl.: H04W 16/10, H04W 72/04

(54) **PARAMETER PROCESSING METHOD, AND ACCESS POINT DEVICE, STATION DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Kudlek, Franz Thomas
(86) International application number: PCT/CN2021/100662
(87) International publication number: WO 2022/261900

(57) **Abstract**

The embodiments of the present disclosure relate to the technical field of mobile communications. Provided are a parameter processing method, and an access point device, a station device and a storage medium. The method is applied to an access point device which supports multiple links. The method comprises: sending a target wireless frame, wherein the target wireless frame carries spatial reuse (SR) parameter information of at least two communication links of an access point device, and the SR parameter information comprises target SR parameter information corresponding to a station of each of the communication links. By means of the embodiments of the present disclosure, spatial reuse in a multi-link communication scenario is realized, thereby improving the system throughput.

## Description

### FIELD

The present disclosure relates to the field of mobile communication technology, and particularly to a method for processing a parameter, an access point device, a station device and a storage medium.

### BACKGROUND

With the rapid development of mobile communication technology, a wireless fidelity (Wi-Fi) technology has made great progress in transmission rate and throughput. The recent study in the Wi-Fi technology includes such as bandwidth transmission of 320 MHz, aggregation and coordination of multiple frequency bands, with main applications in scenarios such as video transmission, augmented reality (AR), virtual reality (VR), etc.

Specifically, the aggregation and coordination of multiple frequency bands refer to that devices communicate at 2.4 GHz, 5.8 GHz, 6 GHz and other frequency bands at the same time. For a scenario where the devices communicate at multiple frequency bands at the same time, a new media access control (MAC) mechanism needs to be defined for management. Moreover, the aggregation and coordination of multiple frequency bands are expected to support low-latency transmission.

Currently, in the multi-band aggregation and coordination technology, a maximum bandwidth to be supported is 320 MHz (160 MHz+160 MHz). Moreover, 240 MHz (160 MHz+80 MHz) and other bandwidths supported by existing standards may also be supported.

In the currently studied Wi-Fi technology, multi-link communication is supported. For example, an access point (AP) and a station (STA) in a wireless communication system may be multi-link devices (MLDs), and the MLDs simultaneously support the sending function and/or the receiving function under multiple links at the same moment. Therefore, multiple links may exist between the AP MLD and the STA MLD for communication.

Furthermore, a spatial reuse (SR) technology has been introduced to improve spectrum utilization and to accommodate highly dense communication environments. However, an existing SR mechanism only supports single-link applications and is not suitable for the multi-link communication.

### SUMMARY

Embodiments of the present disclosure provide a method for processing a parameter, an access point device, a station device and a storage medium, to provide an SR mechanism that supports multi-link communication.

In an aspect, embodiments of the present disclosure provide a method for processing a parameter, which is performed by an access point device supporting multiple links. The method includes: sending a target radio frame. The target radio frame carries spatial reuse (SR) parameter information about at least two communication links of the access point device; and the SR parameter information comprises multiple pieces of target SR parameter information corresponding to stations of the at least two communication links respectively.

In another aspect, embodiments of the present disclosure also provide a method for processing a parameter, which is performed by a station. The method includes: receiving a target radio frame. The target radio frame carries spatial reuse (SR) parameter information about at least two communication links of an access point device; and the SR parameter information comprises multiple pieces of target SR parameter information corresponding to stations of the at least two communication links respectively.

In another aspect, embodiments of the present disclosure also provide an access point device, which supports multiple links, and includes: a sending module configured to send a target radio frame. The target radio frame carries spatial reuse (SR) parameter information about at least two communication links of the access point device; and the SR parameter information comprises multiple pieces of target SR parameter information corresponding to stations of the at least two communication links respectively.

In another aspect, embodiments of the present disclosure also provide a station device, which includes: a receiving module configured to receive a target radio frame. The target radio frame carries spatial reuse (SR) parameter information about at least two communication links of an access point device; and the SR parameter information comprises multiple pieces of target SR parameter information corresponding to stations of the at least two communication links respectively.

Embodiments of the present disclosure also provide an electronic device, which includes: a memory, a processor and a computer program stored in the memory and executable on the processor. The processor, when executes the computer program, implements the method as described in one or more embodiments of the present disclosure.

Embodiments of the present disclosure also provide a computer readable storage medium having stored therein a computer program. The computer program, when executed by a processor, causes the method as described in one or more embodiments of the present disclosure to be implemented.

In embodiments of the present disclosure, the target radio frame is sent via an AP MLD, the target radio frame carries the spatial reuse (SR) parameter information about the at least two communication links of the access point device, and the SR parameter information includes multiple pieces of target SR parameter information corresponding to the stations of the at least two communication links respectively. Based on the multiple pieces of target SR parameter information, spatial reuse in a multi-link communication scenario is realized, and the system throughput is improved.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

In order to clearly illustrate technical solutions of embodiments of the present disclosure, a brief description of drawings to be used in the description of embodiments of the present disclosure is given below. Apparently, the drawings in the following descriptions are only some embodiments of the present disclosure, and for those skilled in the art, other drawings can be obtained according to these drawings without creative labor.
FIG. 1 is a first flow chart illustrating a method for processing a parameter provided by embodiments of the present disclosure;
FIG. 2 is a schematic diagram illustrating a first example of embodiments of the present disclosure;
FIG. 3 is a schematic diagram illustrating a second example of embodiments of the present disclosure;
FIG. 4 is a second flow chart illustrating a method for processing a parameter provided by embodiments of the present disclosure;
FIG. 5 is a third flowchart illustrating a method for processing a parameter provided by embodiments of the present disclosure;
FIG. 6 is a schematic block diagram illustrating an access point device provided by embodiments of the present disclosure;
FIG. 7 is a schematic block diagram illustrating a station device provided by embodiments of the present disclosure; and
FIG. 8 is a schematic block diagram illustrating an electronic device provided by embodiments of the present disclosure.

### DETAILED DESCRIPTION

In embodiments of the present disclosure, the term "and/or" describes an associated relationship of associated objects, and means that there may be three relationships. For example, an expression "A and/or B" may indicate three cases where A exists alone, A and B exist at the same time, and B exists alone. A character "/" generally indicates that contextual objects are in an "or" relationship.

In embodiments of the present disclosure, a phrase "a plurality of" refers to two or more, and other quantifiers are similar thereto.

Technical solutions in embodiments of the present disclosure will be described clearly and thoroughly with reference to the accompanying drawings. Apparently, the embodiments described herein are only a part of embodiments of the present disclosure, rather than all embodiments of the present disclosure. Other embodiments obtained by those skilled in the art based on the embodiments described herein without creative labor are within the protection scope of the present disclosure.

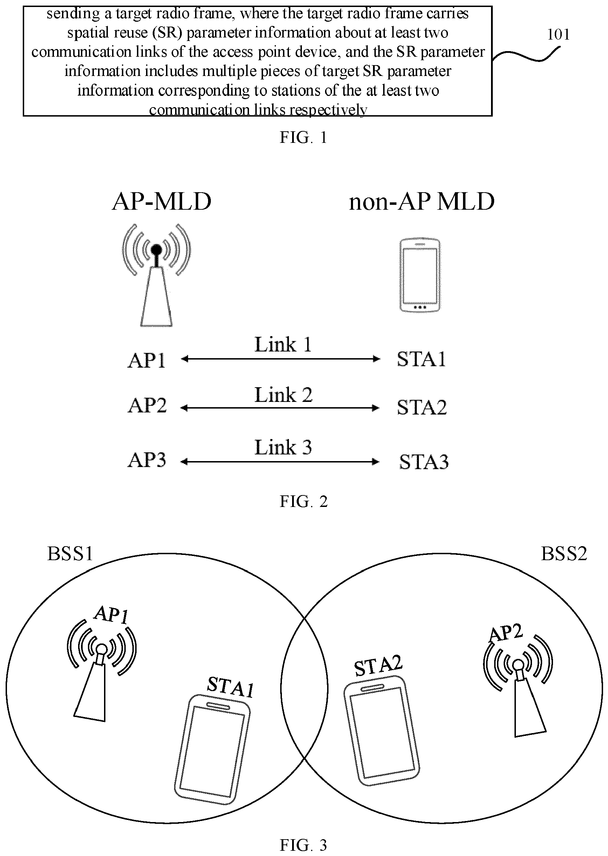

As shown in FIG. 1, embodiments of the present disclosure provide a method for processing a parameter. Optionally, the method may be performed by an access point device (an AP or an AP MLD) supporting multiple links. The method may include a following step.

In step S101, a target radio frame is sent. The target radio frame carries spatial reuse (SR) parameter information about at least two communication links of the access point device; and the SR parameter information includes multiple pieces of target SR parameter information corresponding to stations of the at least two communication links respectively. Optionally, the target radio frame may be sent in one of the communication links.

In a wireless local area network, a basic service set (BSS) may be composed of an AP and one or more stations (STAs) that communicate with the AP. A basic service set may be connected to a distribution system (DS) through the AP thereof and then connected to another basic service set to form an extended service set (ESS).

In embodiments of the present disclosure, the AP and the STA may be devices supporting multiple links, and may be represented as for example an AP MLD and a non-AP MLD, respectively. For convenience of description, hereinafter, an example in which one AP communicates with one STA under multiple links is mainly described. However, example embodiments of the present disclosure are not limited thereto.

As a first example, referring to FIG. 2, the AP MLD may represent an access point supporting a multi-link communication function, and the non-AP MLD may represent a station supporting the multi-link communication function. With reference to FIG. 2, the AP MLD may operate under three links, such as an AP1, an AP2 and an AP3 shown in FIG. 2, and these APs may operate under a link 1, a link 2 and a link 3 respectively; the non-AP MLD may also operate under three links, such as an STA1, an STA2 and an STA3 as shown in FIG. 2, with the STA1 operating under the link 1, the STA2 operating under the link 2, and the STA3 operating under the link 3. In the example of FIG. 2, it is assumed that the AP1 communicates with the STA1 via the first link 1, similarly, the AP2 communicates with the STA2 via the second link 2, and the AP3 communicates with the STA3 via the third link 3. Furthermore, the links 1-3 may be multiple links at different frequencies, e.g. links at 2.4 GHz, 5 GHz, and 6 GHz, respectively, or may be multiple links with the same or different bandwidths at 2.4 GHz. Furthermore, there exist multiple channels for each of the links. It will be understood that the communication scenario shown in FIG. 2 is explanatory as an example, and the concept of the present disclosure is not limited thereto. For example, the AP MLD may be connected to multiple non-AP MLDs, or the AP may communicate with multiple other types of stations under each of the links.

In a multi-link scenario, the AP MLD sends the target radio frame to the non-AP MLD, and the target radio frame may be for example a beacon frame, a probe response frame, a multi-link probe response (ML Probe Response) frame, etc. For example, the AP MLD carries the SR parameter information in an ML information element, carries the ML information element in the target radio frame, and sends the target radio frame to a corresponding station under a communication link (or a communication connection).

The SR parameter information includes parameter information about spatial reuse of multiple links supported by the AP MLD, and the parameter information is used for the spatial reuse during data interaction between the AP MLD and the station. In embodiments of the present disclosure, the target radio frame carries the SR parameter information about the at least two communication links of the access point device. That is, the target radio frame includes the SR parameter information about multiple links. Both the AP MLD and the STA MLD operate under the multi-link scenario, and the target radio frame carries the SR parameter information about each of the links to support the spatial reuse under the multi-link scenario. Optionally, the AP MLD may select one link as a sending channel to send the target radio frame to the STA MLD.

The SR parameter information includes multiple pieces of target SR parameter information corresponding to the stations of the at least two communication links respectively. As an optional embodiment, the multiple pieces of target SR parameter information corresponding to the stations of the at least two communication links are different. That is, the SR parameter information corresponding to each of the at least two communication links has a different parameter part, i.e. the target SR parameter information. Generally, the APs under respective links of the AP MLD are configured to belong to different basic service sets. As a second example, referring to FIG. 3, a BSS1 includes the AP1 and the STA1, and a BSS2 includes the AP2 and the STA2. Each of the stations corresponds to a different BSS and thus to different target SR parameter information. Each of the multiple pieces of target SR parameter information includes, for example, a spatial reuse group basic service set identification color bitmap (SRG BSS Color Bitmap), so the SR parameter information includes the SRG BSS Color Bitmaps corresponding to the stations respectively.

It may be understood that the SR parameter information also includes SR parameter information common to all stations (hereinafter referred to as common SR parameter information), and the common SR parameter information includes, for example, element identification, element identification extension, etc. Each of the stations receives the common SR parameter information and the respective target SR parameter information, and then performs the spatial reuse during the data interaction with the AP MLD based on the SR parameter information.

In embodiments of the present disclosure, the AP MLD sends the target radio frame, the target radio frame carries the SR parameter information about the at least two communication links of the access point device, and the SR parameter information includes the multiple pieces of target SR parameter information corresponding to the stations of the at least two communication links respectively. Based on the multiple pieces of target SR parameter information, the spatial reuse in a multi-link communication scenario is realized, and the system throughput is improved.

As an optional embodiment, each of the multiple pieces of target SR parameter information includes: at least one of spatial reuse group basic service set identification color bitmap (SRG BSS Color Bitmap) information and spatial reuse group partial basic service set identification bitmap (SRG Partial BSSID Bitmap) information.

For each of the stations, it corresponds to a different BSS, and thus corresponds to a different SRG BSS Color Bitmap and a different SRG Partial BSSID Bitmap. In this way, the SR parameter information includes at least one of the SRG BSS Color Bitmap and the SRG Partial BSSID Bitmap corresponding to each of the stations, namely, indicates different SR parameter information under each of the links to realize the spatial reuse under the multi-link scenario. Furthermore, since APs belonging to the same AP MLD do not belong to the same BSS, BSS color values or BSSID values generated thereby are also different, and belong to different SRG BSS color bitmaps or different SRG partial BSSID bitmaps.

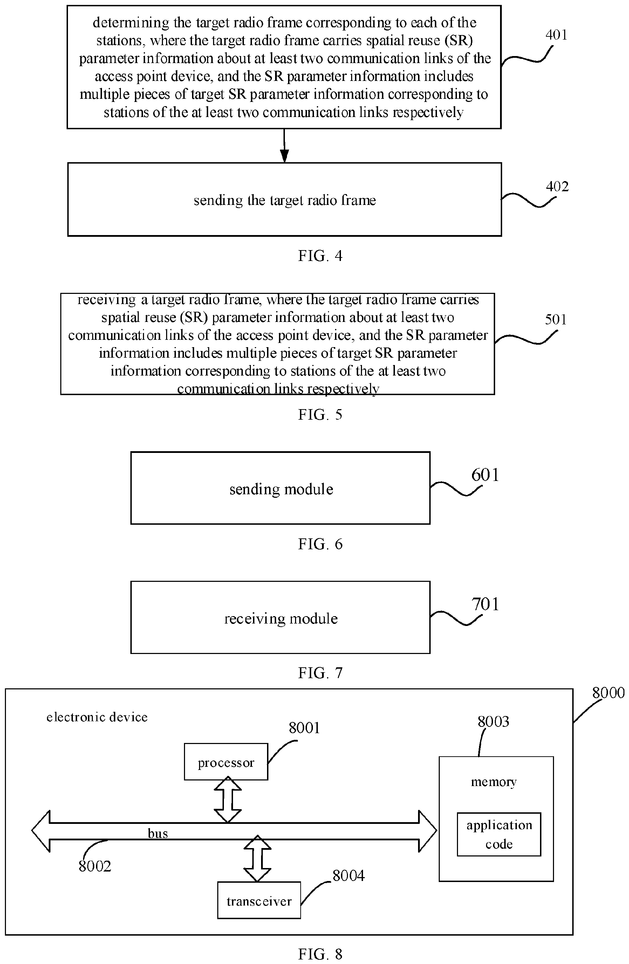

Referring to FIG. 4, embodiments of the present disclosure also provides a method for processing a parameter. Optionally, the method may be applied to the access point device (the AP or the AP MLD) supporting the multiple links. The method may include the following steps.

In step S401, the target radio frame corresponding to each of the stations is determined.

The AP MLD firstly generates the target radio frame before sending the target radio frame. The AP MLD determines the common SR parameter information of the stations and the respective target SR parameter information about each of the stations associated with the AP MLD, and generates and sends the target radio frame. The AP MLD may be associated with multiple stations under each of the links.

The target radio frame carries the SR parameter information about at least two communication links of the access point device, and the SR parameter information includes the multiple pieces of target SR parameter information corresponding to the stations of the at least two communication links respectively.

The SR parameter information in the target radio frame includes the common SR parameter information and the target SR parameter information. The common SR parameter information includes, for example, the element identification, the element identification extension, etc. Each of the stations receives the common SR parameter information and the respective target SR parameter information, and then performs the spatial reuse during the data interaction with the AP MLD based on the SR parameter information. Furthermore, before receiving the SR parameter information, the station may learn the SRG BSS color information, the SRG Partial BSSID information or the like through signaling interaction.

In step S402, the target radio frame is sent.

Optionally, the target radio frame may be sent in one of the communication links.

In an optional embodiment, the target radio frame includes a multi-link (ML) information element; and the ML information element includes at least one of Multi-Link Control information, per-station profile (per-STA profile) information, and link information (Link info).

In addition to the Multi-Link Control information, the per-STA profile information and the Link info, the ML information element may also include other information. As a third example, other information (such as element identification, length, element identification extension) and the respective number of octets, as well as the common information are as shown in Table 1.

**Table 1:**

| Information Content | Element ID | Length | Element ID Extension | Multi-Link Control | Common info | Link info |
|---|---|---|---|---|---|---|
| Octets | 1 | 1 | 1 | 2 | variable | variable |

Moreover, the AP carries the SR parameter information under each of the links, specifically contained in the per-STA profile of the ML information element, and the format of the per-STA profile information is as shown in Table 2.

**Table 2:**

| Information Content | Subelement ID | Length | SAT Control | SAT info | STA profile |
|---|---|---|---|---|---|
| Octets | 1 | 1 | 2 | variable | variable |

In Table 2, a STA profile field carries the SR parameter information.

It may be understood that, in addition to the information content disclosed in Table 1, the SR parameter information also includes other information required by the stations in the operation of the spatial reuse, e.g. element identification (Element ID), length (Length), spatial reuse control (SR Control), spatial reuse group overlapping basic service set preamble detect minimum transmit power offset (SRG OBSS PDMin Offset), spatial reuse group overlapping basic service set preamble detect maximum transmit power offset (SRG OBSS PD Max Offset), as well as the aforementioned SRG BSS Color Bitmap, SRG Partial BSSID Bitmap, etc., which will not be described in detail here.

In an optional embodiment, the ML information element further includes SR indication information, and the SR indication information indicates whether the SR parameter information exists in the target radio frame. That is to say, the SR indication information indicates that the spatial reuse is in an MLD level. The SR indication information is carried in the Multi-Link Control information or the station control (STA Control) information.

As a fourth example, the format of the Multi-Link Control information is as shown in Table 3. In case that the SR indication information is carried in the Multi-Link Control information, it is carried for example in a reserved field.

**Table 3**

| Content | Type | Reserved | Presence Bitmap |
|---|---|---|---|
| Bits | 3 | 1 | 12 |
| Bits Sequence | B0 to B2 | B3 to B4 | B5 to B15 |

As a fifth example, in case that the SR indication information is carried in the per-STA profile information, the format of the per-STA profile information is as shown in Table 4, and the SR indication information may be carried in a reserved field with 6 octets included in an STA Control field.

**Table 4**

| Content | link ID info | Complete Profile | MLD MAC Address Present | Interval Beacon Present | DTIM info present | NSTR Link Pair Present | NSTR Bitmap Size | Reserved |
|---|---|---|---|---|---|---|---|---|
| Bits | 4 | 1 | 1 | 1 | 1 | 1 | 1 | 6 |
| Bits Sequence | B0 to B3 | B4 | B5 | B6 | B7 | B8 | B9 | B10 to B15 |

In Table 4, DTIM represents delivery traffic indication map, and NSTR represents nonsimultaneous transmit and receive.

As an optional embodiment, the target SR parameter information is carried in the Link info, that is, the target SR parameter information of each of the stations is carried in a Presence Bitmap field. As a sixth example, as shown in Table 5, in the format of the Presence Bitmap, the target SR parameter information may be carried in a reserved field.

**Table 5**

| Content | MLD MAC Address Present | link ID info Present | BSS parameters change Count Present | Medium synchronization Delay information Present | enhanced multi-link Capabilities Present | Capabilities Present MLD | Reserved |
|---|---|---|---|---|---|---|---|
| Bits | 1 | 1 | 1 | 1 | 1 | 1 | 6 |

As an optional embodiment, the target radio frame includes at least one of a beacon frame, a probe response frame, a multi-link probe response (ML Probe Response) frame, an association response frame and a reassociation response frame. It may be understood that, besides above, the target radio frame may also include other forms, which are not specifically limited in embodiments of the present disclosure.

In embodiments of the present disclosure, the AP MLD sends the target radio frame, the target radio frame carries the SR parameter information about the at least two communication links of the access point device, and the SR parameter information includes the multiple pieces of target SR parameter information corresponding to the stations of the at least two communication links respectively. Based on the multiple pieces of target SR parameter information, the spatial reuse in the multi-link communication scenario is realized, and the system throughput is improved.

Referring to FIG. 5, embodiments of the present disclosure also provide a method for processing a parameter, which is performed by a station (STA). The STA may be a device providing voice and/or data connectivity to a user, a handheld device with a wireless connection function, or other processing devices connected to a wireless modem, etc. The method includes a following step.

In step S501, a target radio frame is received. The target radio frame carries spatial reuse (SR) parameter information about at least two communication links of an access point device, and the SR parameter information includes multiple pieces of target SR parameter information corresponding to stations of the at least two communication links respectively.

In a wireless local area network, a BSS may be composed of an AP and one or more STAs that communicate with the AP. A BSS may be connected to a DS through the AP thereof and then connected to another BSS to form an extended service set (ESS).

In embodiments of the present disclosure, the AP and the STA may be devices supporting multiple links, and may be represented as for example an AP MLD and a non-AP MLD, respectively. For convenience of description, hereinafter, an example in which one AP communicates with one STA under multiple links is mainly described. However, example embodiments of the present disclosure are not limited thereto.

As a first example, referring to FIG. 2, the AP MLD may represent an access point supporting a multi-link communication function, and the non-AP MLD may represent a station supporting the multi-link communication function. With reference to FIG. 2, the AP MLD may operate under three links, such as an AP1, an AP2 and an AP3 shown in FIG. 2, and these APs may operate under a link 1, a link 2 and a link 3 respectively; the non-AP MLD may also operate under three links, such as an STA1, an STA2 and an STA3 as shown in FIG. 2, with the STA1 operating under the link 1, the STA2 operating under the link 2, and the STA3 operating under the link 3. In the example of FIG. 2, it is assumed that the AP1 communicates with the STA1 via the first link 1, similarly, the AP2 communicates with the STA2 via the second link 2, and the AP3 communicates with the STA3 via the third link 3. Furthermore, the links 1-3 may be multiple links at different frequencies, e.g. links at 2.4 GHz, 5 GHz, and 6 GHz, respectively, or may be multiple links with the same or different bandwidths at 2.4 GHz. Furthermore, there exist multiple channels for each of the links. It will be understood that the communication scenario shown in FIG. 2 is explanatory as an example, and the concept of the present disclosure is not limited thereto. For example, the AP MLD may be connected to multiple non-AP MLDs, or the AP may communicate with multiple other types of stations under each of the links.

In a multi-link scenario, the non-AP MLD receives the target radio frame sent by the AP MLD, and the target radio frame may be for example a beacon frame, a probe response frame, an ML Probe Response frame, etc. For example, the AP MLD carries the SR parameter information in an ML information element, carries the ML information element in the target radio frame, and sends the target radio frame to a corresponding STA under a communication link (or a communication connection). After receiving the target radio frame, the STA obtains the SR parameter information from the target radio frame.

The SR parameter information includes parameter information about spatial reuse of multiple links supported by the AP MLD, and the parameter information is used for the spatial reuse during data interaction between the AP MLD and the station. In embodiments of the present disclosure, the target radio frame carries the SR parameter information about the at least two communication links of the access point device. That is, the target radio frame includes the SR parameter information about multiple links. Both the AP MLD and the STA MLD operate under the multi-link scenario, and the target radio frame carries the SR parameter information about each of the links to support the spatial reuse under the multi-link scenario. Optionally, the AP MLD may select one link as a sending channel to send the target radio frame to the STA MLD.

The SR parameter information includes multiple pieces of target SR parameter information corresponding to the stations of the at least two communication links respectively. As an optional embodiment, the multiple pieces of target SR parameter information corresponding to the stations of the at least two communication links are different. That is, the SR parameter information corresponding to each of the at least two communication links has a different parameter part, i.e. the target SR parameter information. Generally, the APs under respective links of the AP MLD are configured to belong to different basic service sets, and each of the stations corresponds to a different BSS and thus to different target SR parameter information. Each of the multiple pieces of target SR parameter information includes, for example, an SRG BSS Color Bitmap, so the SR parameter information includes the SRG BSS Color Bitmaps corresponding to the stations respectively.

It may be understood that the SR parameter information also includes common SR parameter information, and the common SR parameter information includes, for example, element identification, element identification extension, etc. Each of the stations receives the common SR parameter information and the respective target SR parameter information, and then performs the spatial reuse during the data interaction with the AP MLD based on the SR parameter information.

In embodiments of the present disclosure, the station receives the target radio frame, the target radio frame carries the SR parameter information about the at least two communication links of the access point device, and the SR parameter information includes the multiple pieces of target SR parameter information corresponding to the stations of the at least two communication links respectively. Based on the multiple pieces of target SR parameter information, the spatial reuse in a multi-link communication scenario is realized, and the system throughput is improved.

As an optional embodiment, each of the multiple pieces of target SR parameter information includes: at least one of spatial reuse group basic service set identification color bitmap (SRG BSS Color Bitmap) information and spatial reuse group partial basic service set identification bitmap (SRG Partial BSSID Bitmap) information.

For each of the stations, it corresponds to a different BSS, and thus corresponds to a different SRG BSS Color Bitmap and a different SRG Partial BSSID Bitmap. In this way, the SR parameter information includes at least one of the SRG BSS Color Bitmap and the SRG Partial BSSID Bitmap corresponding to each of the stations, namely, indicates different SR parameter information under each of the links to realize the spatial reuse under the multi-link scenario. Furthermore, since APs belonging to the same AP MLD do not belong to the same BSS, BSS color values or BSSID values generated thereby are also different, and belong to different SRG BSS color bitmaps or different SRG partial BSSID bitmaps.

In an optional embodiment, the target radio frame includes a multi-link (ML) information element; and the ML information element includes at least one of Multi-Link Control information, per-STA profile information, and Link info.

In addition to the Multi-Link Control information, the per-STA profile information and the Link info, the ML information element may also include other information. Referring to the aforementioned third example, other information (such as element identification, length, element identification extension) and the respective number of octets, as well as the common information are as shown in Table 1. In addition to the information content disclosed in Table 1, the SR parameter information also includes other information required by the stations in the operation of the spatial reuse, e.g. Element ID, Length, SR Control, SRG OBSS PDMin Offset, SRG OBSS PD Max Offset, as well as the aforementioned SRG BSS Color Bitmap, SRG Partial BSSID Bitmap etc., which will not be described in detail here.

Moreover, the AP carries the SR parameter information under each of the links, specifically contained in the per-STA profile of the ML information element, and the format of the per-STA profile information is as shown in Table 2, which will not be described in detail here.

As an optional embodiment, the ML information element further includes SR indication information, and the SR indication information indicates whether the SR parameter information exists in the target radio frame. That is to say, the SR indication information indicates that the spatial reuse is in an MLD level. The SR indication information is carried in the Multi-Link Control information or the per-STA profile information.

Referring to the aforementioned fourth example, the format of the Multi-Link Control information is as shown in Table 3. In case that the SR indication information is carried in the Multi-Link Control information, it is carried for example in a reserved field. In case that the SR indication information is carried in the per-STA profile information, referring to the aforementioned fifth example, the format of the per-STA profile information is as shown in Table 4, and the number of octets included in the per-STA profile field may vary, and the SR indication information may be carried therein.

As an optional embodiment, the target SR parameter information is carried in the Link info, that is, the target SR parameter information of each of the stations is carried in the Presence Bitmap field.

As an optional embodiment, the target SR parameter information is carried in the Link info, that is, the target SR parameter information of each of the stations is carried in the Presence Bitmap field. Referring to the aforementioned sixth example, as shown in Table 5, in the format of the Presence Bitmap, the target SR parameter information may be carried in the reserved field.

As an optional embodiment, the target radio frame includes at least one of a beacon frame, a probe response frame, a multi-link probe response (ML Probe Response) frame, an association response frame and a reassociation response frame. It may be understood that, besides above, the target radio frame may also include other forms, which are not specifically limited in embodiments of the present disclosure.

In embodiments of the present disclosure, the station receives the target radio frame, the target radio frame carries the SR parameter information about the at least two communication links of the access point device, and the SR parameter information includes the multiple pieces of target SR parameter information corresponding to the stations of the at least two communication links respectively. Based on the multiple pieces of target SR parameter information, the spatial reuse in the multi-link communication scenario is realized, and the system throughput is improved.

Referring to FIG. 6, embodiments of the present disclosure also provide an access point device, which supports multiple links. The device includes a sending module 601.

The sending module 601 is configured to send a target radio frame. The target radio frame carries spatial reuse (SR) parameter information about at least two communication links of the access point device, and the SR parameter information includes multiple pieces of target SR parameter information corresponding to stations of the at least two communication links respectively.

In a wireless local area network, a basic service set (BSS) may be composed of an AP and one or more stations that communicate with the AP. A basic service set may be connected to a distribution system (DS) through the AP thereof and then connected to another basic service set to form an extended service set (ESS).

In embodiments of the present disclosure, the AP and the STA may be devices supporting multiple links, and may be represented as for example an AP MLD and a non-AP MLD, respectively. For convenience of description, hereinafter, an example in which one AP communicates with one STA under multiple links is mainly described. However, example embodiments of the present disclosure are not limited thereto.

As a first example, referring to FIG. 2, the AP MLD may represent an access point supporting a multi-link communication function, and the non-AP MLD may represent a station supporting the multi-link communication function. With reference to FIG. 2, the AP MLD may operate under three links, such as an AP1, an AP2 and an AP3 shown in FIG. 2, and these APs may operate under a link 1, a link 2 and a link 3 respectively; the non-AP MLD may also operate under three links, such as an STA1, an STA2 and an STA3 as shown in FIG. 2, with the STA1 operating under the link 1, the STA2 operating under the link 2, and the STA3 operating under the link 3. In the example of FIG. 2, it is assumed that the AP1 communicates with the STA1 via the first link 1, similarly, the AP2 communicates with the STA2 via the second link 2, and the AP3 communicates with the STA3 via the third link 3. Furthermore, the links 1-3 may be multiple links at different frequencies, e.g. links at 2.4 GHz, 5 GHz, and 6 GHz, respectively, or may be multiple links with the same or different bandwidths at 2.4 GHz. Furthermore, there exist multiple channels for each of the links. It will be understood that the communication scenario shown in FIG. 2 is explanatory as an example, and the concept of the present disclosure is not limited thereto. For example, the AP MLD may be connected to multiple non-AP MLDs, or the AP may communicate with multiple other types of stations under each of the links.

In a multi-link scenario, the AP MLD sends the target radio frame to the non-AP MLD, and the target radio frame may be for example a beacon frame, a probe response frame, an ML probe response frame, etc. For example, the AP MLD carries the SR parameter information in an ML information element, carries the ML information element in the target radio frame, and sends the target radio frame to a corresponding station under a communication link (or a communication connection).

The SR parameter information includes parameter information about spatial reuse of multiple links supported by the AP MLD, and the parameter information is used for the spatial reuse during data interaction between the AP MLD and the station. In embodiments of the present disclosure, the target radio frame carries the SR parameter information about the at least two communication links of the access point device. That is, the target radio frame includes the SR parameter information about multiple links. Both the AP MLD and the STA MLD operate under the multi-link scenario, and the target radio frame carries the SR parameter information about each of the links to support the spatial reuse under the multi-link scenario. Optionally, the AP MLD may select one link as a sending channel to send the target radio frame to the STA MLD.

The SR parameter information includes multiple pieces of target SR parameter information corresponding to the stations of the at least two communication links respectively. As an optional embodiment, the multiple pieces of target SR parameter information corresponding to the stations of the at least two communication links are different. That is, the SR parameter information corresponding to each of the at least two communication links has a different parameter part, i.e. the target SR parameter information. Generally, the APs under respective links of the AP MLD are configured to belong to different basic service sets. As a second example, referring to FIG. 3, a BSS1 includes the AP1 and the STA1, and a BSS2 includes the AP2 and the STA2. Each of the stations corresponds to a different BSS and thus to different target SR parameter information. Each of the multiple pieces of target SR parameter information includes, for example, an SRG BSS Color Bitmap), so the SR parameter information includes the SRG BSS Color Bitmaps corresponding to the stations respectively.

It may be understood that the SR parameter information also includes SR parameter information common to all stations (hereinafter referred to as common SR parameter information), and the common SR parameter information includes, for example, element identification, element identification extension, etc. Each of the stations receives the common SR parameter information and the respective target SR parameter information, and then performs the spatial reuse during the data interaction with the AP MLD based on the SR parameter information.

In an optional embodiment, the multiple pieces of target SR parameter information corresponding to the stations of the at least two communication links are different.

In an optional embodiment, each of the multiple pieces of target SR parameter information includes: at least one of spatial reuse group basic service set identification color bitmap (SRG BSS Color Bitmap) information and spatial reuse group partial basic service set identification bitmap (SRG Partial BSSID Bitmap) information.

In an optional embodiment, the device includes: a radio frame determining module, configured to determine the target radio frame corresponding to each of the stations.

In an optional embodiment, the target radio frame includes the ML information element; and the ML information element includes at least one of multi-link control information, per-STA profile information, and Link info.

In an optional embodiment, the ML information element further includes SR indication information, and the SR indication information indicates whether the SR parameter information exists in the target radio frame.

The SR indication information is carried in multi-link control information or STA Control information.

In an optional embodiment, each of the multiple pieces of target SR parameter information is carried in the Link info.

In an optional embodiment, the target radio frame includes at least one of a beacon frame, a probe response frame, an ML probe response frame, an association response frame and a reassociation response frame.

In embodiments of the present disclosure, the sending module 601 sends the target radio frame, the target radio frame carries the SR parameter information about the at least two communication links of the access point device, and the SR parameter information includes the multiple pieces of target SR parameter information corresponding to the stations of the at least two communication links respectively. Based on the multiple pieces of target SR parameter information, the spatial reuse in a multi-link communication scenario is realized, and the system throughput is improved.

Embodiments of the present disclosure also provide an apparatus for processing a parameter, which is applied to an access point device supporting multiple links. The apparatus includes a radio frame sending module.

The radio frame sending module is configured to send a target radio frame. The target radio frame carries SR parameter information about at least two communication links of the access point device, and the SR parameter information includes multiple pieces of target SR parameter information corresponding to stations of the at least two communication links respectively.

The apparatus also includes other modules of the access point device as described in the previous embodiments, which will not be described again here.

Referring to FIG. 7, embodiments of the present disclosure also provide a station device. The device includes a receiving module 701.

The receiving module 701 is configured to receive a target radio frame. The target radio frame carries SR parameter information about at least two communication links of an access point device, and the SR parameter information includes multiple pieces of target SR parameter information corresponding to stations of the at least two communication links respectively.

In a wireless local area network, a BSS may be composed of an AP and one or more STAs that communicate with the AP. A BSS may be connected to a DS through the AP thereof and then connected to another BSS to form an extended service set (ESS).

In embodiments of the present disclosure, the AP and the STA may be devices supporting multiple links, and may be represented as for example an AP MLD and a non-AP MLD, respectively. For convenience of description, hereinafter, an example in which one AP communicates with one STA under multiple links is mainly described. However, example embodiments of the present disclosure are not limited thereto.

In a multi-link scenario, the non-AP MLD receives the target radio frame sent by the AP MLD, and the target radio frame may be for example a beacon frame, a probe response frame, an ML Probe Response frame, etc. For example, the AP MLD carries the SR parameter information in an ML information element, carries the ML information element in the target radio frame, and sends the target radio frame to a corresponding STA under a communication link (or a communication connection). After receiving the target radio frame, the STA obtains the SR parameter information from the target radio frame.

The SR parameter information includes parameter information about spatial reuse of multiple links supported by the AP MLD, and the parameter information is used for the spatial reuse during data interaction between the AP MLD and the station. In embodiments of the present disclosure, the target radio frame carries the SR parameter information about the at least two communication links of the access point device. That is, the target radio frame includes the SR parameter information about multiple links. Both the AP MLD and the STA MLD operate under the multi-link scenario, and the target radio frame carries the SR parameter information about each of the links to support the spatial reuse under the multi-link scenario. Optionally, the AP MLD may select one link as a sending channel to send the target radio frame to the STA MLD.

The SR parameter information includes multiple pieces of target SR parameter information corresponding to the stations of the at least two communication links respectively. As an optional embodiment, the multiple pieces of target SR parameter information corresponding to the stations of the at least two communication links are different. That is, the SR parameter information corresponding to each of the at least two communication links has a different parameter part, i.e. the target SR parameter information. Generally, the APs under respective links of the AP MLD are configured to belong to different basic service sets, and each of the stations corresponds to a different BSS and thus to different target SR parameter information. Each of the multiple pieces of target SR parameter information includes, for example, an SRG BSS Color Bitmap, so the SR parameter information includes the SRG BSS Color Bitmaps corresponding to the stations respectively.

It may be understood that the SR parameter information also includes common SR parameter information, and the common SR parameter information includes, for example, element identification, element identification extension, etc. Each of the stations receives the common SR parameter information and the respective target SR parameter information, and then performs the spatial reuse during the data interaction with the AP MLD based on the SR parameter information.

In an optional embodiment, the multiple pieces of target SR parameter information corresponding to the stations of the at least two communication links are different.

In an optional embodiment, each of the multiple pieces of target SR parameter information includes: at least one of spatial reuse group basic service set identification color bitmap (SRG BSS Color Bitmap) information and spatial reuse group partial basic service set identification bitmap (SRG Partial BSSID Bitmap) information.

In an optional embodiment, the target radio frame includes an ML information element; and the ML information element includes at least one of multi-link control information, per-STA profile information, and Link info.

In an optional embodiment, the ML information element further includes SR indication information, the SR indication information indicates whether the SR parameter information exists in the target radio frame; and the SR indication information is carried in the multi-link control information or the per-STA profile information.

In an optional embodiment, each of the multiple pieces of target SR parameter information is carried in the Link info.

In an optional embodiment, the target radio frame includes at least one of a beacon frame, a probe response frame, an ML probe response frame, an association response frame and a reassociation response frame.

In embodiments of the present disclosure, the receiving module 701 receives the target radio frame, the target radio frame carries the SR parameter information about the at least two communication links of the access point device, and the SR parameter information includes the multiple pieces of target SR parameter information corresponding to the stations of the at least two communication links respectively. Based on the multiple pieces of target SR parameter information, the spatial reuse in a multi-link communication scenario is realized, and the system throughput is improved.

Embodiments of the present disclosure also provide an apparatus for processing a parameter, which is applied to a station device. The apparatus includes a radio frame receiving module.

The radio frame receiving module is configured to receive a target radio frame. The target radio frame carries SR parameter information about at least two communication links of an access point device, and the SR parameter information includes multiple pieces of target SR parameter information corresponding to stations of the at least two communication links respectively.

The apparatus also includes other modules of the access point device as described in the previous embodiments, which will not be described again here.

It may be understood that, in embodiments of the present disclosure, the methods, the apparatuses and the devices are based on the same concept. Since the methods, apparatuses and devices have similar principles for solving problems, the implementation of the methods, apparatuses and devices may be referred to each other, and repeated details will not be elaborated.

Based on the same principle as the method shown in embodiments of the present disclosure, embodiments of the present disclosure also disclose an electronic device. The electronic device may include, but is not limited to: a processor and a memory, the memory is configured to store a computer program, and the processor is configured to execute the method for processing the parameter shown in any optional embodiment of the present disclosure by calling the computer program.

In an optional embodiment, an electronic device is also provided. As shown in FIG. 8, the electronic device 8000 shown in FIG. 8 may be a server, including a processor 8001 and a memory 8003. The processor 8001 is coupled to the memory 8003, such as through a bus 8002. Optionally, the electronic device 8000 may also include a transceiver 8004. It should be noted that the transceiver 8004 is not limited to one in practical applications, and the structure of the electronic device 8000 does not constitute a limitation on embodiments of the present disclosure.

The processor 8001 may be a CPU (Central Processing Unit), a general-purpose processor, a DSP (Digital Signal Processor), an ASIC (Application Specific Integrated Circuit), an FPGA (Field Programmable Gate Array), or other programmable logic devices, transistor logic devices, hardware components, or any combination thereof. It may implement or execute the various illustrative logical blocks, modules and circuits described in connection with the present disclosure. The processor 8001 may also be a combination that implements computing functions, such as a combination of one or more microprocessors, a combination of the DSP and the microprocessor, etc.

The bus 8002 may include a path to transmit information between the above-mentioned components. The bus 8002 may be a PCI (Peripheral Component Interconnect) bus or an EISA (Extended Industry Standard Architecture) bus, etc. The bus 8002 may be divided into an address bus, a data bus, a control bus, etc. For ease of illustration, the bus 8002 is only shown as a thick line in FIG. 8, but it does not mean that there is only one bus or one type of bus.

The memory 8003 may be, but not limited to, an ROM (Read Only Memory) or other types of static storage device that can store static information and instructions, an RAM (Random Access Memory) or other types of dynamic storage device that can store information and instructions, and may also be an EEPROM (Electrically Erasable Programmable Read Only Memory), a CD-ROM (Compact Disc Read Only Memory) or other compact disc storage, optical disk storage (including a compact optical disk, a laser disk, an optical disk, a digital versatile disk, a blu-ray disk, etc.), magnetic disk storage media or other magnetic storage devices, or any other medium which can be used to carry or store desired program code in the form of instructions or data structures and can be accessed by a computer.

The memory 8003 is configured to store application code that executes solutions of the present disclosure, and the execution is controlled by the processor 8001. The processor 8001 is configured to execute the application code stored in the memory 8003 to implement the contents shown in the foregoing method embodiments.

The electronic device includes, but is not limited to: a mobile terminal such as a mobile phone, a notebook computer, a digital broadcast receiver, a PDA (personal digital assistant), a PAD (a tablet computer), a PMP (a portable multimedia player), an in-vehicle terminal (e.g. an in-vehicle navigation terminal) and the like, and a fixed terminal such as a digital TV, a desktop computer and the like. The electronic device shown in FIG. 8 is only an example and should not impose any limitation on the function and scope of use of embodiments of the present disclosure.

The server provided in the present disclosure may be an independent physical server, a server cluster or a distributed system composed of multiple physical servers, or a cloud server providing basic cloud computing services, such as a cloud service, a cloud database, cloud computation, a cloud function, a cloud storage, a network service, a cloud communication, a middleware service, a domain name service, a security service, CDN, and a large data and an artificial intelligence platform. The terminal may be, but is not limited to, a smart phone, a tablet computer, a notebook computer, a desktop computer, a smart speaker box, a smart watch, etc. The terminal and the server may be directly or indirectly connected by wired or wireless communication, and the present disclosure is not limited thereto.

Embodiments of the present disclosure disclose a computer-readable storage medium having stored therein a computer program which, when executed on a computer, enables the computer to perform the corresponding contents of the foregoing method embodiments.

It should be understood that, although the various steps in the flowcharts of the figures are shown in order as indicated by the arrows, the steps are not necessarily performed in the order indicated by the arrows. Unless explicitly stated herein, there is no strict limitation on the order in which these steps are performed, and these steps may be performed in other orders. Moreover, at least some of the steps in the flowcharts of the figures may include sub-steps or stages that are not necessarily performed at the same time, but may be performed at different times, and the order of their execution may not necessarily be sequential, but may be performed in turn or in alternation with other steps or at least some of the sub-steps or stages of other steps.

It should be noted that the computer-readable medium described above in the present disclosure may be either a computer-readable signal medium or a computer-readable storage medium or any combination thereof. The computer readable storage medium may be, such as, but not limited to an electronic, magnetic, optical, electromagnetic, infrared, or semiconductor system, apparatus or device, or any suitable combination of the foregoing. More specific examples of the computer readable storage medium may include, but not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical memory device, a magnetic memory device, or any appropriate combination of the foregoing. In the present disclosure, the computer readable storage medium may be any tangible medium that contains or stores a program. The program may be used by or in conjunction with an instruction execution system, apparatus or device. In the present disclosure, the computer readable signal medium may include a data signal transmitted in the baseband or as a part of a carrier, in which computer readable program codes are carried. The transmitted data signal may employ a plurality of forms, including but not limited to, an electromagnetic signal, a light signal or any suitable combination thereof. The computer readable signal medium may further be any computer readable medium other than the computer readable storage medium. The computer readable signal medium may send, propagate or transmit programs configured to be used by or in combination with an instruction execution system, apparatus or device. The program codes included in the computer readable medium may be transmitted by any appropriate medium, including but not limited to electric wire, optical cable, RF (Radio Frequency), or any suitable combination of the foregoing.

The computer-readable medium may be included in the electronic device; it may also be exist independently without being assembled into the electronic device.

The computer-readable medium carries one or more programs which, when executed by the electronic device, enable the electronic device to perform the methods of embodiments described above.

According to an aspect of the present disclosure, there is provided a computer program product or computer program that includes computer instructions stored in the computer-readable storage medium. The processor of the computer device reads the computer instructions from the computer-readable storage medium, and executes the computer instructions to enable the computer device to perform a parameter configuration method or a parameter determination method provided in the various optional implementations described above.

The computer program codes for executing operations of the present disclosure may be programmed using one or more programming languages or a combination thereof. The programming languages include object-oriented programming languages, such as Java, Smalltalk, C++, and may also include conventional procedural programming languages, such as the "C" language or similar programming languages. The program codes may be executed entirely on a user computer, partly on the user computer, as a stand-alone software package, partly on the user computer and partly on a remote computer, or entirely on the remote computer or server. In the scenario involving the remote computer, the remote computer may be connected to the user computer through any type of network, including a local area network (LAN) or a wide area network (WAN), or may be connected to an external computer (for example, through the Internet provided by an Internet service provider).

The flow charts and the block diagrams in the accompanying drawings illustrate the architecture, functions and operations of possible implementations of systems, methods and computer program products according to various embodiments of the present disclosure. In this regard, each block in the flow chart or the block diagram may represent a module, a program segment, or a part of code. The module, the program segment or the part of code contains one or more executable instructions for implementing specified logical functions. It should be noted that in some alternative implementations, the functions noted in the blocks may also occur in an order different from those noted in the accompanying drawings. For example, two consecutive blocks may actually be executed in substantially parallel, and sometimes may be executed in a reverse order, which depends on the functions involved. It should also be noted that, each block in the block diagram and/or the flow chart, and the combination of blocks in the block diagram and/or the flow chart, may be implemented with a dedicated hardware-based system for performing specified functions or actions, or may be implemented with a combination of dedicated hardware and computer instructions.

The modules involved in embodiments of the present disclosure may be implemented in software or hardware. The name of the module does not in some cases constitute a limitation on the module itself, for example, an A module may also be described as "an A module for performing a B operation".

The foregoing description is only illustrative of the preferred embodiments of the present disclosure and of the technology principles employed. It should be understood by those skilled in the art that the scope of the present disclosure is not limited to the technical solutions constituted by particular combinations of technical features described above, but is intended to cover other technical solutions constituted by any combinations of the features described above or their equivalents without departing from the spirit of the present disclosure, for example, a technical solution formed by replacing the above-mentioned features with technical features having similar functions disclosed in the present disclosure (but not limited thereto).

## Claims

1. A method for processing a parameter, performed by an access point device supporting multiple links, comprising:
sending a target radio frame, wherein the target radio frame carries spatial reuse (SR) parameter information about at least two communication links of the access point device; and the SR parameter information comprises multiple pieces of target SR parameter information corresponding to stations of the at least two communication links respectively.

2. The method of claim 1, wherein the multiple pieces of target SR parameter information corresponding to the stations of the at least two communication links are different.

3. The method of claim 1, wherein each of the multiple pieces of target SR parameter information comprises: at least one of spatial reuse group basic service set identification color bitmap (SRG BSS Color Bitmap) information and spatial reuse group partial basic service set identification bitmap (SRG Partial BSSID Bitmap) information.

4. The method of claim 1, wherein before sending the target radio frame, the method comprises:
determining the target radio frame corresponding to each of the stations.

5. The method of claim 4, wherein the target radio frame comprises a multi-link (ML) information element; and
the ML information element comprises at least one of multi-link control information, per-station profile (per-STA profile) information, and link information (Link info).

6. The method of claim 5, wherein the ML information element further comprises SR indication information, wherein the SR indication information indicates whether the SR parameter information exists in the target radio frame; and
the SR indication information is carried in the multi-link control information or station control (STA Control) information.

7. The method of claim 5, wherein each of the multiple pieces of target SR parameter information is carried in the Link info.

8. The method of any one of claims 1 to 7, wherein the target radio frame comprises at least one of a beacon frame, a probe response frame, a multi-link probe response (ML Probe Response) frame, an association response frame and a reassociation response frame.

9. A method for processing a parameter, performed by a station, comprising:
receiving a target radio frame, wherein the target radio frame carries spatial reuse (SR) parameter information about at least two communication links of an access point device; and the SR parameter information comprises multiple pieces of target SR parameter information corresponding to stations of the at least two communication links respectively.

10. The method of claim 9, wherein the multiple pieces of target SR parameter information corresponding to the stations of the at least two communication links are different.

11. The method of claim 9, wherein each of the multiple pieces of target SR parameter information comprises: at least one of spatial reuse group basic service set identification color bitmap (SRG BSS Color Bitmap) information and spatial reuse group partial basic service set identification bitmap (SRG Partial BSSID Bitmap) information.

12. The method of claim 11, wherein the target radio frame comprises a multi-link (ML) information element; and
the ML information element comprises at least one of multi-link control information, per-station profile (per-STA profile) information, and link information (Link info).

13. The method of claim 12, wherein the ML information element further comprises SR indication information, wherein the SR indication information indicates whether the SR parameter information exists in the target radio frame; and
the SR indication information is carried in the multi-link control information or the per-STA profile information.

14. The method of claim 12, wherein each of the multiple pieces of target SR parameter information is carried in the Link info.

15. The method of any one of claims 9 to 14, wherein the target radio frame comprises at least one of a beacon frame, a probe response frame, a multi-link probe response (ML Probe Response) frame, an association response frame and a reassociation response frame.

16. An access point device, being an access point device supporting multiple links, and comprising:
a sending module configured to send a target radio frame, wherein the target radio frame carries spatial reuse (SR) parameter information about at least two communication links of the access point device, and the SR parameter information comprises multiple pieces of target SR parameter information corresponding to stations of the at least two communication links respectively.

17. A station device, comprising:
a receiving module configured to receive a target radio frame, wherein the target radio frame carries spatial reuse (SR) parameter information about at least two communication links of an access point device, and the SR parameter information comprises multiple pieces of target SR parameter information corresponding to stations of the at least two communication links respectively.

18. An electronic device comprising a memory, a processor and a computer program stored in the memory and executable on the processor, wherein the processor, when executes the computer program, implements the method according to any one of claims 1 to 15.

19. A computer readable storage medium having stored therein a computer program, wherein the computer program, when executed by a processor, causes the method according to any one of claims 1 to 15 to be implemented.
